# EUROPEAN PATENT SPECIFICATION

(11) **EP 2 821 622 B1**
(45) Date of publication and mention of the grant of the patent: **05.09.2018**
(21) Application number: 13755339.2
(22) Date of filing: 27.02.2013
(51) Int. Cl.: F02C 7/18, F01D 25/12, F01D 25/24, F01D 11/10

(54) **GAS TURBINE ENGINE**
GASTURBINENMOTOR
MOTEUR À TURBINE À GAZ

(30) Priority: 29.02.2012 JP 2012043133
(43) Date of publication of application: 07.01.2015
(73) Proprietor: IHI Corporation, Tokyo 135-8710 (JP)
(72) Inventor: NAKAMATA Chiyuki, Tokyo 1358710 (JP)
(74) Representative: Lamb, Martin John Carstairs
(86) International application number: PCT/JP2013/055247
(87) International publication number: WO 2013/129530

(56) References cited:
- JP-A- S62 153 504
- JP-A- 2005 042 616
- US-A- 3 365 172
- US-A- 6 155 778
- US-A- 6 155 778
- US-A1- 2008 124 214

## Description

### TECHNICAL FIELD

The present invention relates to a gas turbine engine.

### BACKGROUND ART

In a gas turbine engine such as a turbo fan engine, a shroud is provided facing the turbine rotor blade. This shroud is arranged on the tip side of the turbine rotor blade, and constitutes a portion of a passage of a combustion gas that flows from a combustor to the turbine.

Because the turbine rotor blade and the shroud are exposed to high-temperature combustion gas that is discharged from the combustor, a cooling mechanism is generally provided. For example, Patent Document 1 provides a turbine blade that is provided with film cooling holes that flow cooling air to a blade surface.

### PRIOR ART DOCUMENTS

### PATENT DOCUMENTS

[Patent Document 1] Japanese Unexamined Patent Application, First Publication No. 2002-227604.

US 6 155 778 A, US 2008/124214 A1 and US 6 365 172 A disclose the features of the preamble portion of claim 1.

### DISCLOSURE OF THE INVENTION

### PROBLEMS TO BE SOLVED BY THE INVENTION

In the case of cooling the shroud, it is conceivable to provide film cooling holes in the shroud in the manner of Patent Document 1 and adopt a structure that supplies cooling air to the surface of the shroud from the film cooling holes.

However, due to thermal expansion, the turbine rotor blade and the shroud expand, and the tip of the turbine rotor blade may slightly graze (hereinbelow rub) the surface of the shroud. When the tip of the turbine rotor blade rubs against the surface of the shroud in this way, the distal end of the turbine rotor blade or the gas pass surface of the shroud melts due to frictional heat, which in the long run may lead to the film cooling holes being blocked.

The present invention was achieved in view of the aforementioned circumstances. In a gas turbine engine that is provided with a shroud that is arranged facing a turbine rotor blade, the present invention has as its object to prevent the blocking of the film cooling holes that are provided in the shroud.

### MEANS FOR SOLVING THE PROBLEMS

The present invention is a gas turbine engine as claimed in claim 1.

### EFFECTS OF THE INVENTION

According to the present invention, groove portions are provided in the surface of a shroud, and film cooling holes are opened to the bottom portion of each of the groove portions. For this reason, even in the case of rubbing, it is possible to prevent the tip of the turbine rotor blade from making contact with the openings of the film cooling holes. As a result, even in the case of melting of the distal end of the rotor blade or the shroud during rubbing, it is possible to prevent the melt product from blocking the film cooling holes.

### BRIEF DESCRIPTION OF THE DRAWINGS

FIG. 1 is a cross-sectional view that shows the outline configuration of a turbofan engine in one embodiment of the present invention.
FIG. 2A is a perspective view that shows a portion of a shroud that is provided in a turbofan engine in one embodiment illustrating aspects of the present invention.
FIG. 2B is a cross-sectional view along line A-A in FIG. 2A.
FIG. 2C is a cross-sectional view along line B-B in FIG. 2A.
FIG. 3 is a schematic view that shows the relation between a turbine rotor blade and a groove portions provided in a turbofan engine in one embodiment of the present invention.
FIG. 4A is an outline view that shows a shroud that is provided in a turbofan engine in one embodiment of the present invention.
FIG. 4B is a cross-sectional view that shows a modification of a shroud that is provided in a turbofan engine in one embodiment of the present invention.

### EMBODIMENTS FOR CARRYING OUT THE INVENTION

Hereinbelow, one embodiment of a gas turbine engine according to the present invention shall be described, with reference to the drawings. Note that in the following drawings, the scale of each member is suitably altered in order to make each member a recognizable size. Also, in the following embodiment, the description is given for a turbofan engine that is one example of a gas turbine engine. However, the present invention is not limited to a turbofan engine, and can be applied to any gas turbine engine.

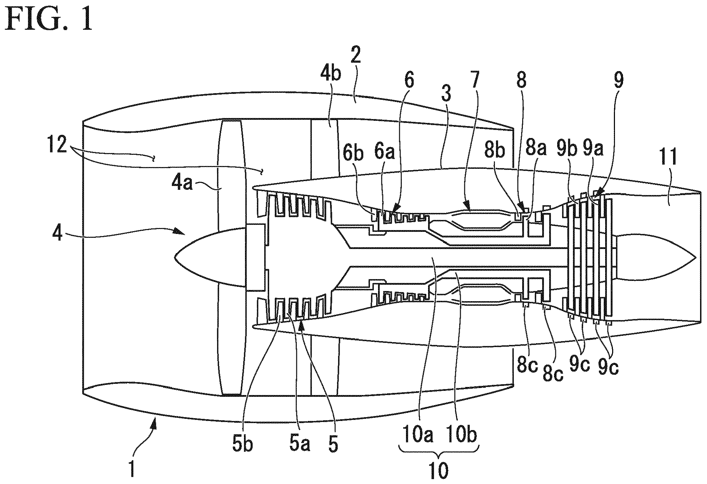

FIG. 1 is a cross-sectional view that shows the outline configuration of a turbofan engine 1 of the present embodiment. As shown in this drawing, the turbofan engine 1 of the present embodiment is provided with a fan cowl 2, a core cowl 3, a fan 4, a low-pressure compressor 5, a high-pressure compressor 6, a combustor 7, a high-pressure turbine 8, a low-pressure turbine 9, a shaft 10, and a main nozzle 11.

The fan cowl 2 is a tubular-type member that is arranged furthest to the upstream in the turbofan engine 1, with the upstream end and downstream end in the flow direction of the air serving as opening ends, and the upstream end functioning as an air intake. Also, the fan cowl 2 houses the upstream side of the core cowl 3 and the fan 4 in the inner portion thereof, as shown in FIG. 1.

The core cowl 3 is a tubular-type member with a smaller diameter than the fan cowl 2, and similarly to the fan cowl 2, the upstream end and downstream end in the flow direction of the air serve as opening ends. The core cowl 3 houses in the inner portion thereof the low-pressure compressor 5, the high-pressure compressor 6, the combustor 7, the high-pressure turbine 8, the low-pressure turbine 9, the shaft 10, and the main nozzle 11 and the like, which are the principal portions of the turbofan engine 1.

In the present embodiment, in the region where the core cowl 3 does not exist in the axial direction (the left-right direction of FIG. 1), the internal space of the fan cowl 2 functions as a duct 12 through which the airflow flows, and in the region where the core cowl 3 does exist in the axial direction, the space sandwiched by the fan cowl 2 and the core cowl 3 functions as a duct 12 through which the airflow flows.

Note that the inner portion of the core cowl 3 serves as a passage (hereinbelow called a core passage) through which a portion of the air that is taken into the fan cowl 2 and the combustion gas that is generated in the combustor 7 pass. Also, as shown in FIG. 1, the fan cowl 2 and the core cowl 3 are arranged in the shape of concentric circles when viewed from the flow direction of air, with a gap arranged between them. The gap between the fan cowl 2 and the core cowl 3 is made to serve as a bypass passage that discharges to the outside the remainder of the air taken into the fan cowl 2 that does not flow into the core passage. Also, the fan cowl 2 and the core cowl 3 are attached to the fuselage or wings of an aircraft by pylons that are not illustrated.

The fan 4 forms the air flow that flows into the fan cowl 2, and is provided with a plurality of fan rotor blades 4a that are fixed to a shaft 10, and a plurality of fan stator blades 4b that are arranged in the bypass passage. Note that the shaft 10, which is described in detail below, is divided into two in the radial direction, when viewed from the flow direction of the air. More precisely, the shaft 10 is constituted by a solid first shaft 10a that is the core, and a hollow second shaft 10b that is arranged on the outer side surrounding the first shaft 10a. The fan rotor blades 4a are fixed to the first shaft 10a of the shaft 10.

As shown in FIG. 1, the low-pressure compressor 5 is arranged further to the upstream than the high-pressure compressor 6, and it compresses air that is sent into the core passage by the fan 4. The low-pressure compressor 5 is equipped with rotor blades 5a fixed to the first shaft 10a of the shaft 10, and stator blades 5b fixed to the inner wall of the core cowl 3. A blade lattice of one stage is formed by a plurality of the stator blades 5b arranged in an annular manner and a plurality of the rotor blades 5a arranged in an annular manner to the downstream side thereof in the axial direction. The low-pressure compressor 5 is constituted by blade lattices of a plurality of stages being arranged in the axial direction.

As shown in FIG. 1, the high-pressure compressor 6 is arranged to the downstream of the low-pressure compressor 5, and compresses to a higher pressure the air sent in from the low-pressure compressor 5. The high-pressure compressor 6 is equipped with rotor blades 6a fixed to the second shaft 10b of the shaft 10, and stator blades 6b fixed to the inner wall of the core cowl 3. Note that in the same manner as the low-pressure compressor 5, a blade lattice of one stage is formed by a plurality of the stator blades 6b arranged in an annular manner and a plurality of the rotor blades 6a arranged in an annular manner to the downstream side thereof in the axial direction. The high-pressure compressor 6 is constituted by blade lattices of a plurality of stages being arranged in the axial direction.

The combustor 7 is arranged at the downstream of the high-pressure compressor 6, and generates combustion gas by burning an air-fuel mixture consisting of the compressed air sent in from the high-pressure compressor 6, and fuel supplied from a non-illustrated injector.

The high-pressure turbine 8 is arranged at the downstream of the combustor 7, and recovers the rotative power from the combustion gas discharged from the combustor 7, and drives the high-pressure compressor 6. The high-pressure turbine 8 is equipped with a plurality of turbine rotor blades 8a that are fixed to the second shaft 10b of the shaft 10, a plurality of turbine stator vanes 8b that are fixed to the core passage, and shrouds 8c, and causes the second shaft 10b to rotate by receiving with the turbine rotor blades 8a the combustion gas that has been straightened by the turbine stator vanes 8b. The shrouds 8c, which are provided facing the tip of the turbine rotor blades 8a, form a portion of the passage of the combustion gas discharged from the combustor 7. The shrouds 8c shall be described in detail below.

The low-pressure turbine 9 is arranged at the downstream of the high-pressure turbine 8, and further recovers rotative power from the combustion gas that passed the high-pressure turbine 8, and drives the fan 4 and the low-pressure compressor 5. The low-pressure turbine 9 is equipped with a plurality of turbine rotor blades 9a that are fixed to the first shaft 10a of the shaft 10, a plurality of turbine stator blades 9b that are fixed to the core passage, and shrouds 9c, and causes the first shaft 10a to rotate by receiving with the turbine rotor blades 9a the combustion gas that has been straightened by the turbine stator blades 9b. The shrouds 9c form a portion of the passage of the combustion gas that is discharged from the combustor 7. If, similarly to the shrouds 8c of the high-pressure turbine, the shrouds 9c of the low-pressure turbine are provided facing the tip of the turbine rotor blades 9a, they are sometimes formed integrated with the turbine rotor blades 9a at the tip portion of the turbine rotor blades 9a.

The shaft 10 is a rod-shaped member that is arranged facing the flow direction of air, and conveys the rotative force recovered by the turbines (the high-pressure turbine 8 and the low-pressure turbine 9) to the fan 4 and the compressors (the low-pressure compressor 5 and the high-pressure compressor 6). The shaft 10, as mentioned above, is divided into two in the radial direction, to be constituted by the first shaft 10a and the second shaft 10b. The rotor blades 5a of the low-pressure compressor 5 and the fan rotor blades 4a of the fan 4 are attached to the first shaft 10a at the upstream, while the turbine rotor blades 9a of the low-pressure turbine 9 are attached at the downstream. Also, the rotor blades 6a of the high-pressure compressor 6 are attached to the second shaft 10b at the upstream, and the turbine rotor blades 8a of the high-pressure turbine 8 are attached at the downstream.

The main nozzle 11 is provided further to the downstream than the low-pressure turbine 9, and ejects combustion gas that has passed through the low-pressure turbine 9 toward the rear of the turbofan engine 1. The thrust of the turbofan engine 1 is obtained by the reaction when the combustion gas is ejected from the main nozzle 11.

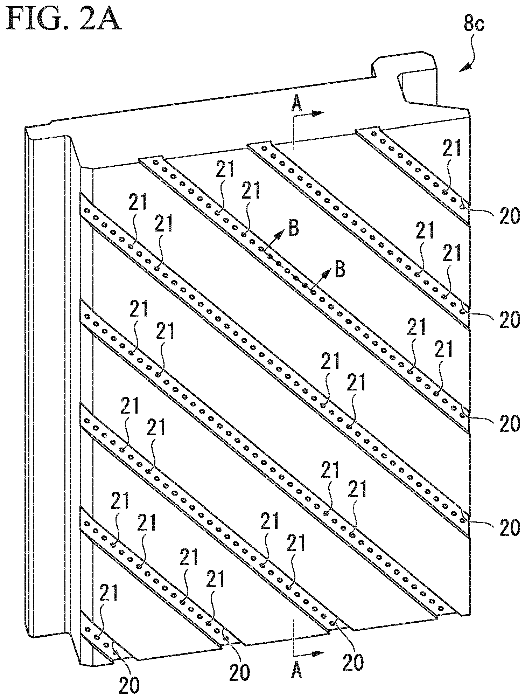

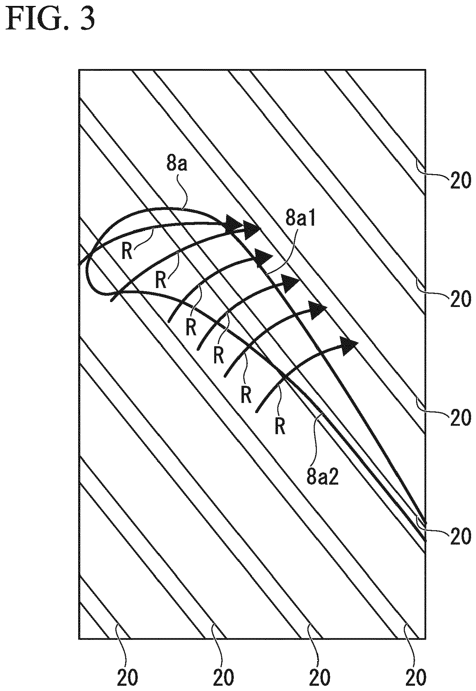

Next, the shroud 8c shall be described in greater detail, referring to FIG. 2A to FIG. 2C and FIG. 3. Note that in the case of the shroud 9c of the low-pressure turbine having a form like the shroud 8c of the high-pressure turbine, although the shroud 9c of the low-pressure turbine is installed at a different position from the shroud 8c of the high-pressure turbine, its constitution is similar. For this reason, in the following description, the shroud 8c of the high-pressure turbine shall be described while referring to the drawings, with a description of the shroud 9c of the low-pressure turbine being omitted.

Hereinbelow, the shroud 8c of the high-pressure turbine and shroud 9c of the low-pressure turbine shall be denoted simply as the shroud 8c and the shroud 9c.

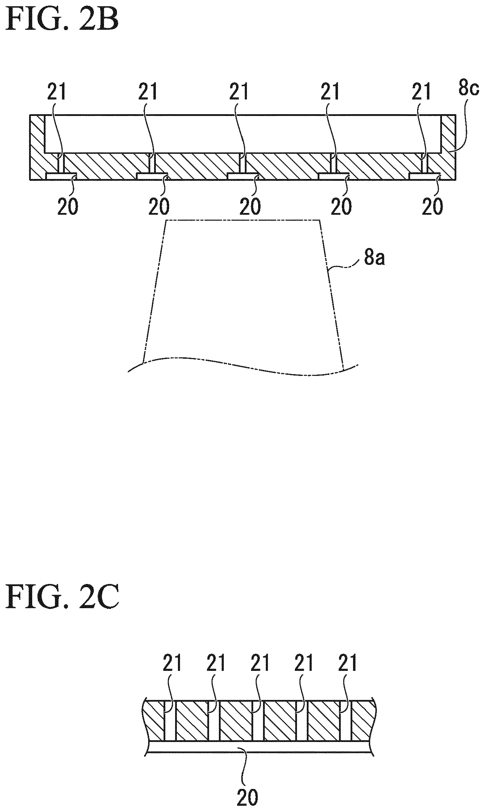

FIG. 2A is a perspective view that shows a portion of the shroud 8c in an embodiment illustrating aspects of the present invention. FIG. 2B is a cross-sectional view along line A-A in FIG. 2A, and FIG. 2C is a cross-sectional view along line B-B in FIG. 2A. As shown in these drawings, the shroud 8c is equipped with a groove portion 20 that is provided in the surface facing the turbine rotor blades 8a (the combustion gas passage surface), and a plurality of film cooling holes 21 that open to the bottom portion of the groove portion 20.

The groove portion 20 is provided in the shape of a straight line with a constant depth from the combustion gas passage surface in the surface layer of the combustion gas passage surface of the shroud 8c, and is provided in a plurality at a regular interval. FIG. 3 is a schematic view that shows the relation between the turbine rotor blade 8a and the groove portions 20. As shown in this drawing, the plurality of groove portions 20 are arrayed at a regular interval in the direction from the pressure side 8a2 to the suction side 8a1 of the turbine rotor blade 8a.

The film cooling holes 21 are through holes that penetrate from the cooling air supply side of the shroud 8c to the bottom portion of the groove portion 20, and are provided in a plurality at a regular interval in the lengthwise direction of the groove portion 20. Cooling air is supplied from a cooling air supply portion that is not illustrated to each film cooling hole 21. Note that the cooling air supply portion, for example, bleeds compressed air from the high-pressure compressor 6, and supplies it to the film cooling holes 21 as cooling air.

The cooling air that is supplied to the film cooling holes 21 leaves the film cooling holes 21, and flows along the combustion gas passage surface of the shroud 8c. Thereby, the shroud 8c is cooled.

In the turbofan engine 1 of the present embodiment as given above, the groove portion 20 is provided in the surface of the shroud 8c, and the film cooling holes 21 are opened at the bottom portion of the groove portion 20. For this reason, even in the case of the turbine rotor blades 8a and the shroud 8c expanding due to thermal expansion, and the tips of the turbine rotor blades 8a rubbing against the combustion gas passage surface of the shroud 8c, it is possible to prevent the tips of the turbine rotor blades 8a from making contact with the openings of the film cooling holes 21. As a result, even in the case of melting occurring at the distal end portions of the turbine rotor blades 8a or the combustion gas passage surface of the shroud 8c during the rubbing, it is possible to prevent the melt product from blocking the film cooling hole 21.

Also, in the turbofan engine 1 of the present embodiment, the groove portion 20 is arrayed in a plurality at a regular interval in the direction from the pressure side 8a2 to the suction side 8a1 of the turbine rotor blade 8a. A leakage flow R is produced from the high-pressure pressure side 8a2 to the suction side 8a1, between the tip of the turbine rotor blade 8a and the shroud 8c (refer to FIG. 3). In contrast, since the groove portion 20 is arrayed in a plurality at a regular interval in the direction from the pressure side 8a2 to the suction side 8a1 of the turbine rotor blade 8a, a labyrinth seal effect is produced, and it is possible to reduce the flow rate of the leakage flow R. That is, in the turbofan engine 1 of the present embodiment, the groove portion 20 extends in a direction perpendicular to the leakage flow R of the turbine rotor blade 8a, and is arrayed in a plurality in the direction of the leakage flow R.

Note that the plurality of groove portions 20 may either be arranged at a regular interval, or may not be arranged at a regular interval.

Hereinabove, the preferred embodiment of the present invention is described while referring to the appended drawings, but the present invention is not limited to the aforementioned embodiment. The various shapes and combinations of each constituent member shown in the embodiment refer to only a single example, and may be altered in various ways based on design requirements and so forth within a scope that does not deviate from the subject matter of the present invention.

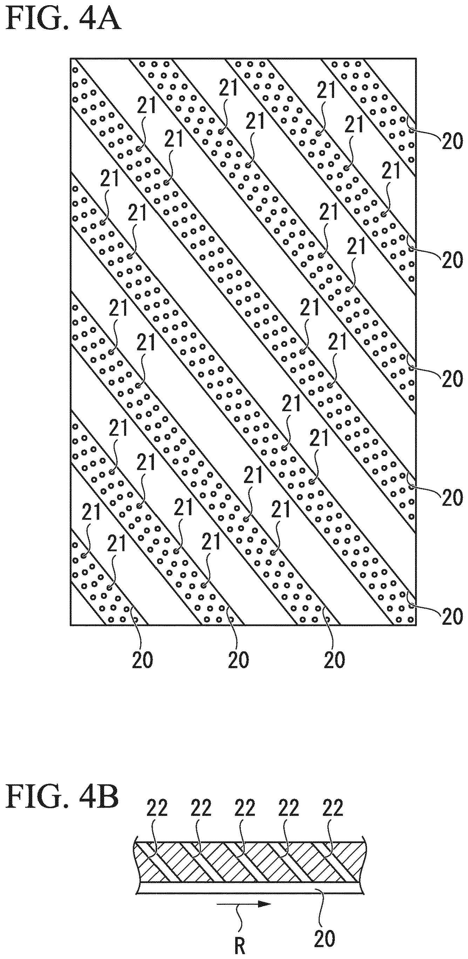

In
the aforementioned embodiment, a description is given for a constitution in which the film cooling holes 21 are arrayed in a row in the groove portion 20. However this constitution does not form part of the present invention. In the present invention, as shown in FIG. 4A, a constitution is adopted that arrays the film cooling holes 21 in a plurality of rows (three rows in FIG. 4A) for one groove portion 20.

Also, as shown in FIG. 4B, film cooling holes 22 may be inclined so that the opening on the bottom portion side of the groove portion 20 is on the downstream of the leakage flow R with respect to the opening on cooling air supply side of the groove portion 20. As for the inclination of the film cooling holes 22, the more it approaches being parallel with respect to the bottom portion of the groove portion 20 the more it is preferable, since the cooling air that is ejected from the film cooling holes 22 flows along the leakage flow R. For example, the film cooling holes 22 are preferably inclined in a range of approximately 0 to 90 degrees with respect to the bottom portion of the groove portion 20. The film cooling hole 22 is more preferably inclined in a range of 0 to 75 degrees with respect to the bottom portion of the groove portion 20. It is still more preferably inclined in a range of 0 to 45 degrees. By adopting the constitution of this kind of film cooling holes 22, since the cooling air is ejected out along the leakage flow R from the film cooling holes 22, it is possible to improve the adherence of the cooling air to the surface of the shroud 8c (9c), and improve the cooling effectiveness.

### INDUSTRIAL APPLICABILITY

In a gas turbine engine that is provided with the shroud of the present invention, groove portions are provided in the surface of the shroud, and film cooling holes are opened in the bottom portion of each of the groove portions. Accordingly, even in the case of rubbing, it is possible to prevent the tip of the turbine rotor blade from making contact with the openings of the film cooling holes. As a result, even in the case of melting of the distal end of the rotor blade or the shroud during rubbing, it is possible to prevent the melt product from blocking the film cooling holes.

### DESCRIPTION OF THE REFERENCE SYMBOLS

1: Turbofan engine (gas turbine engine)
2: Fan cowl
3: Core cowl
4: Fan
4a: Fan rotor blade
4b: Fan stator vane
5: Low-pressure compressor
5a: Rotor blade
5b: Stator vane
6: High-pressure compressor
6a: Rotor blade
6b: Stator vane
7: Combustor
8: High-pressure turbine
8a: Turbine rotor blade
8a1: Suction side
8a2: Pressure side
8b: Turbine stator vane
8c: Shroud
9: Low-pressure turbine
9a: Turbine rotor blade
9b: Turbine stator vane
9c: Shroud
10: Shaft
10a: First shaft
10b: Second shaft
11: Main nozzle
12: Duct
20: Groove portion
21: Film cooling hole
22: Film cooling hole
R: Leakage flow

## Claims

1. A gas turbine engine (1) comprising a plurality of shrouds (8c, 9c) that are arranged facing the tip of a turbine rotor blade (8a, 9a),
wherein each one of the shrouds (8c, 9c) comprises a groove portion (20) that is provided in a surface facing the turbine rotor blade (8a, 9a), and a plurality of film cooling holes that open to a bottom portion of the groove portion (20); **characterized in that** the film cooling holes (21) are arrayed in a plurality of rows for the groove portion (20).

2. The gas turbine engine (1) according to claim 1, wherein the groove portion (20) extends in a direction perpendicular to a leakage flow (R) of the turbine blade (8a, 9a), and is arrayed in a plurality in the direction of the leakage flow (R).

3. The gas turbine engine (1) according to claim 1 or 2, wherein the film cooling holes (21) are inclined so that the opening on the bottom portion side of the groove portion (20) is on the downstream of the leakage flow (R) with respect to the opening on the cooling air supply side of the groove portion (20).

## Patentansprüche

1. Gasturbinenmotor (1), umfassend eine Mehrzahl von Mantelringen (8c; 9c), welche angeordnet sind, um der Spitze einer Turbinenrotorschaufel (8a, 9a) zugewandt zu sein,
wobei jeder der Mantelringe (8c, 9c) einen Nutabschnitt (20), welcher in einer Oberfläche bereitgestellt ist, welche der Turbinenrotorschaufel (8a, 9a) zugewandt ist, und eine Mehrzahl von Filmkühllöchern umfasst, welche sich zu einem Bodenabschnitt des Nutabschnitts (20) öffnen; **dadurch gekennzeichnet, dass** die Filmkühllöcher (21) in einer Mehrzahl von Reihen für den Nutabschnitt (20) angeordnet sind.

2. Gasturbinenmotor (1) nach Anspruch 1, wobei der Nutabschnitt (20) sich in einer Richtung erstreckt, welche zu einem Leckagestrom (R) der Turbinenschaufel (8a, 9a) senkrecht steht und in einer Mehrzahl in der Richtung des Leckagestroms (R) angeordnet ist.

3. Gasturbinenmotor (1) nach Anspruch 1 oder 2, wobei die Filmkühllöcher (21) so geneigt sind, dass die Öffnung auf der Seite des Bodenabschnitts des Nutabschnitts (20) sich auf der stromabwärtigen Seite des Leckagestroms (R) relativ zur Öffnung auf der Kühlluftzuführseite des Nutabschnitts (20) befindet.

## Revendications

1. Moteur à turbine à gaz (1), comprenant plusieurs anneaux (8c, 9c) agencés de sorte à faire face à la pointe d'une aube du rotor de la turbine (8a, 9a) ;
dans lequel chacun des anneaux (8c, 9c) comprend une partie de rainure (20) formée dans une surface faisant face à l'aube du rotor de la turbine (8a, 9a), et plusieurs trous de refroidissement de film ouverts vers une partie de fond de la partie de rainure (20) ; **caractérisé en ce que** les trous de refroidissement de film (21) sont agencés dans plusieurs rainures pour la partie de rainure (20).

2. Moteur à turbine à gaz (1) selon la revendication 1, dans lequel la partie de rainure (20) s'étend dans une direction perpendiculaire à un écoulement de fuite (R) de l'aube de turbine (8a, 9a) et est agencée sous forme de plusieurs parties dans la direction de l'écoulement de fuite (R).

3. Moteur à turbine à gaz (1) selon les revendications 1 ou 2, dans lequel les trous de refroidissement de film (21) sont inclinés de sorte que l'ouverture sur le côté de la partie de fond de la partie de rainure (20) se situe sur l'aval de l'écoulement de fuite (R) par rapport à l'ouverture sur le côté d'alimentation en air de refroidissement de la partie de rainure (20).
